# EUROPEAN PATENT APPLICATION

(11) **EP 0 836 108 A2**
(43) Date of publication of application: **15.04.1998**
(21) Application number: 97117493.3
(22) Date of filing: 09.10.1997
(51) Int. Cl.: G02B 27/02, G02B 27/28, B32B 17/10

(54) **Display system for projecting information to a driver of a car**

(30) Priority: 11.10.1996 JP 269850/96
(71) Applicant: CENTRAL GLASS COMPANY, LIMITED, Yamaguchi 755 (JP)
(72) Inventor: Asakura, Motoh, c/o Central Glass Company, Ltd., Matsuskaka-shi, Mie 515 (JP); Kobayashi, Kazuya, c/o Central Glass Company, Ltd., Matsuskaka-shi, Mie 515 (JP); Nishikawa, Shinji, c/o Central Glass Company, Ltd., Matsuskaka-shi, Mie 515 (JP); Nakamura, Isao, c/o Central Glass Company, Ltd., Matsuskaka-shi, Mie 515 (JP)
(74) Representative: Finsterwald, Martin, Dr.

(57) **Abstract**

A head-up display system of an automotive vehicle, comprising outboard-side and inboard-side glass plates constituting a front windshield glass. The inboard-side glass defines thereinside a passenger compartment in which a driver resides. An intermediate film is disposed between the outboard-side and inboard-side glass plates to bond the glass plates. An optically functioning film arrangement is disposed between the outboard-side and inboard-side glass plates. The optically functioning film arrangement includes first and second polarization-direction changing layers, and a light-transmittable reflection layer disposed between the first and second polarization-direction changing layers. The three layers are laminated to form a single body of the optically functioning film arrangement which is bonded to the outboard-side glass plate and separate from the inboard-side glass plate so that a layer of the intermediate film lies between the optically functioning film arrangement and the inboard-side glass plate. A displaying device is provided to generate a display light of driving information. A light-polarizing device is provided to polarize the display light into P-wave. The display light having the P-wave is to be incident around Brewster's angle on the inboard-side glass plate and reaches the light-transmittable reflection layer to be reflected toward the driver so as to form a display of the driving information.

## Description

### BACKGROUND OF THE INVENTION

### 1.Field of the invention

This invention relates to improvements in a display system for optically projecting a display light of information to be observed by a person, and more particularly to the display system such as a head-up display system which is configured, for example, such that a driver of an automotive vehicle can observe an image of driving information projected as display light on a windshield glass while looking a frontal view through the windshield glass in such a manner that the vehicle information is superimposed on the frontal view.

### 2. Description of the Prior Art

A variety of head-up display systems of an automotive vehicle have been hitherto proposed and put into practical use. A typical head-up display system is constituted by directly applying a film functioning as a half mirror on a windshield glass, or by interposing the half mirror between two glass plates. However, with this head-up display system, reflection of light of an image is unavoidably made on the front-side or rear-side surface of the glass plate thereby forming a double image which is difficult to be observed by a driver. In view of this, another types of the head-up display system have been proposed, in which light of the image is reflected from the surface of the glass plate without using the half mirror in order to avoid formation of the double image. One of these is configured by applying a so-called λ/2 film (for changing a direction of polarization of light) on a transparent plate such as a glass plate, as disclosed in Japanese Patent Provisional Publication No. 2-141720. Another one is configured by bonding a transparent film having birefringence on a transparent plate, as disclosed in Japanese Patent Provisional Publication No. 2-294615. A further one is configured by bonding a polarization-direction changing film formed of a crystalline high polymer on a transparent plate, as disclosed in Japanese Patent Provisional Publication No. 6-40271. Additionally, some of the inventors of this application have proposed a display system including a combination of a polarization-direction changing film, a light-transmittable reflection film and an antireflection film, as disdosed in a United States Patent Application No. 08/621379 entitled "Glass Arrangement".

However, the display systems as disclosed in Japanese Patent Provisional Publication Nos. 2-141720, 2-294615 and 6-40271 have no reflection film, and therefore reflection is made on the front-side surface or the back-side surface of the glass plate so that the reflectivity is lower than 20 %. This makes the brightness of the displayed image insufficient. In view of this, the display system as disclosed in the United States Patent Application has been proposed; however, this requires to form the antireflection film on the surface of the glass plate. This increases the number of steps in a production process while increasing production cost. Additionally, reflection on the antireflection film cannot be completely prevented, and therefore the reflection by the antireflection film will offer disadvantages.

### BRIEF SUMMARY OF THE INVENTION

It is an object of the present invention to provide an improved display system which can effectively overcome drawbacks encountered in conventional display systems such as a head-up display system.

Another object of the present invention is to provide an improved display system by which a person or driver can clearly observe an image displayed at a transparent plate forming part of the display system, particularly in case that the display system serves as a head-up display system in an automotive vehicle.

A further object of the present invention is to provide an improved display system which can effectively prevent a double image from being formed at a transparent plate while improving the brightness of an image displayed at the transparent plate, although the display system is simple in construction.

An aspect of the present invention resides in a display system comprising at least one transparent plate. An optically functioning film arrangement is bonded to the transparent plate and includes first and second polarization-direction changing layers, and a light-transmittable reflection plate disposed between the first and second polarization-direction changing layers. A displaying device is provided to generate a display light of information. A light polarizing device is provided to polarize the display light into P-wave. The display light having the P-wave is to be incident around Brewster's angle with respect to the transparent plate member and reaches the light-transmittable reflection layer to be reflected toward the person so as to form a display of the information.

Another aspect of the present invention resides in a display system comprising first and second transparent plates. The first transparent plate is disposed outside relative to the second transparent plate defining a space in which a person resides. An intermediate film is disposed between the first and second transparent plates to bond the first and second transparent plates. An optically functioning film arrangement is disposed between the first and second transparent plates. The optically functioning film arrangement includes first and second polarization-direction changing layers, and a light-transmittable reflection layer disposed between the first and second polarization-direction changing layers. At least the first polarization-direction changing layer is bonded to the first transparent plate and separate from the second transparent plate so that a layer of the intermediate film lies between the first polarization-direction changing layer and the second transparent plate. A displaying device is provided to generate a display light of information. A light-polarizing device is provided to polarize the display light into P-wave. The display light having the P-wave is to be incident around Brewster's angle on the second transparent plate and reaches the light-transmittable reflection layer to be reflected toward the person so as to form a display of the information.

According to this arrangement, when the display light of the information is incident as the P-wave on the inside transparent plate around Brewster's angle, nearly no reflection is made at the interface between air and the inside transparent plate so that almost whole display light enters the polarization-direction changing layer at the displaying device side to be rotated into S-wave. This S-wave is reflected by the light-transmittable reflection layer and in accordance with the reflectivity of the reflection layer. The display light which has not been reflected reaches the other or next polarization-direction changing layer at the opposite side relative to the polarization-direction changing layer at the displaying device side.

The display light which has been reflected by the light-transmittable reflection layer again enters the polarization-direction changing layer at the displaying device side to be rotated into the P-wave. This P-wave reaches the interface between air and the inside transparent plate and outgoes to air around Brewster's angle, so that nearly no reflection is made at the interface. As a result, almost whole the display light having the P-wave outgoes toward, for example, the driver of the automotive vehicle located at the side of the displaying device, so that the driver can clearly observe the information of the display light.

By the way, the display light which passes through the light-transmittable reflection layer enters as the S-wave into the polarization-direction changing layer at the opposite side relative to the displaying device and rotated into the P-wave. This P-wave reaches the outboard surface (the interface between air and the transparent plate) of the outside transparent plate and outgoes around Brewster's angle, so that nearly no reflection is made at the interface. As a result, almost whole the display light having the P-wave outgoes to the opposite side relative to the displaying device so that the information of the display light cannot be reflected toward the driver thereby preventing double image of the display light from being formed.

### BRIEF DESCRIPTION OF THE DRAWINGS

In the drawings, like reference numerals designate like parts and elements throughout all figures, in which:
Fig. 1 is a fragmentary schematic sectional view of an embodiment of a display system according to the present invention; and
Fig. 2 is an enlarged fragmentary schematic sectional view of an essential part of another embodiment of the display system according to the present invention.

### DETAILED DESCRIPTION OF THE INVENTION

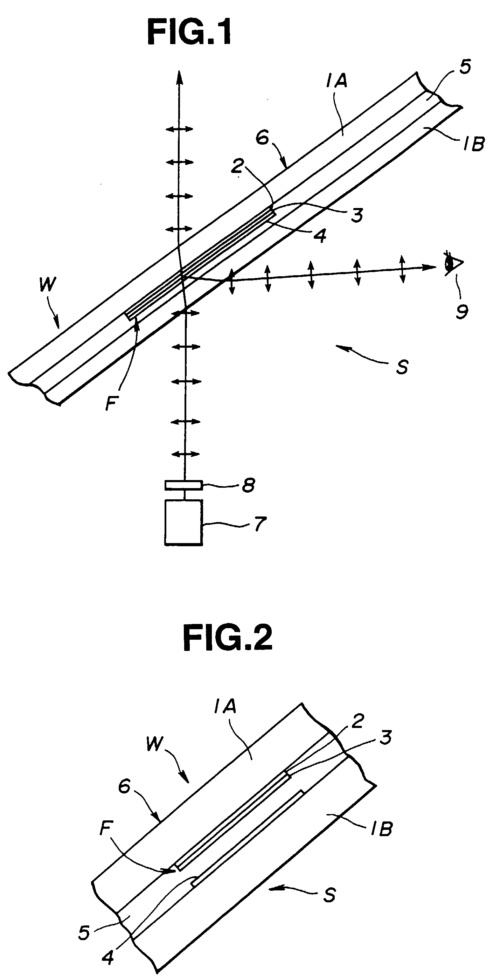

Referring now to Fig. 1 of the drawings, an embodiment of a display system according to the present invention is illustrated by the reference character S. The display system S of this embodiment is a head-up display system and constituted by incorporating an optically functioning film arrangement F in a laminated glass 6 of a front windshield glass W of an automotive vehicle, so that the optically functioning film arrangement F includes a first polarization-direction changing layer 2, a light-transmittable reflection layer 3, and a second polarization-direction changing layer 4, in which these three layers are laminated in the order mentioned. Each polarization-direction changing layer 2, 4 is adapted to change the direction of polarization of light to be incident thereon, i.e., to rotate a plane of polarization of light to be incident thereon. Each polarization-direction changing layer 2, 4 in this embodiment is formed of a liquid crystal high polymer which is in twisted nematic orientation under a liquid crystal condition and is in a glassy state at a temperature lower than liquid crystal transition point thereof.

The polarization-direction changing layer 2, 4 is formed as follows: The liquid crystal high polymer is coated on a transparent substrate (substrate film) such as a plastic film formed of, for example, polyethylene terephthalate (PET). Then a shearing force is applied to the liquid crystal high polymer , and thereafter the liquid crystal high polymer is subjected to heat-treatment and then cooling so that a liquid crystal orientation is fixed. Thus, the polarization-direction changing layer 2, 4 is formed on the surface of the substrate film. Examples of such a liquid crystal high polymer are a main-chain type polymer such as optically active polyester, polyamide, polycarbonate, and polyesterimide , and a side-chain type polymer such as optically active polyacrylate, polymethacrylate, and polymalonate.

The optically functioning film arrangement F is prepared as follows: The first polarization-direction changing layer 2 having a thickness of 5 µm is formed on the substrate film made of polyethylene terephthalate or the like, in the manner mentioned above. Subsequently, silver is coated on the polarization-direction changing layer 2 under usual sputtering to form a silver layer (having a thickness of about 55 A) serving as the light-transmittable reflection layer 3, thereby obtaining a first laminated film. The second polarization-direction changing layer 4 having a thickness of 5 µm is formed on another substrate film of polyethylene terephthalate or the like, in the manner mentioned above. Subsequently, acrylic resin is coated on the polarization-direction changing layer 4 to form a barrier layer, thereby obtaining a second laminated film. The thus formed two (first and second) laminated films are bonded to each other with a tape-like adhesive upon removing the substrate films, thus forming the optically functioning film arrangement F.

The optically functioning film arrangement F is bonded to the inboard surface of an outboard-side glass plate (transparent plate) 1A forming part of the front windshield glass W, with a tape-like adhesive (not shown). As a result, the tape-like adhesive (not shown), the first polarization-direction changing layer 2, the light-transmittable reflection layer 3, the tape-like adhesive (not shown), the second polarization-direction changing layer 4 and the barrier layer (not shown) are in a laminated state in the order mentioned, on the outboard-side glass plate 1A. Then, an inboard-side glass plate (transparent plate) 1B is temporarily bonded at its outboard surface to the inboard surface of the outboard-side glass plate 1A with an intermediate film 5 (made of polyvinyl butyral or the like), so that the optically functioning film arrangement F is located between the outboard-side glass plate 1A and the inboard-side glass plate 1B in such a manner that the film arrangement F is separate from the outboard-side surface of the inboard-side glass plate 1B, as clearly shown in Fig. 1. The inboard-side glass plate 1B defines thereinside a passenger compartment in which a driver and/or a vehicle passenger reside. It will be understood that a layer of the intermediate film 5 lies between the optically functioning laminated film F and the inboard-side glass plate 1B. Such a temporarily bonded structure is then subjected to a usual autoclave treatment, thereby obtaining the laminated glass 6 used for the automotive vehicle front windshield glass W.

The above-discussed laminated glass 6 is used as the automotive vehicle windshield glass W and forms part of the head-up display system S. The head-up display system S includes a displaying device 7 such as a C.R.T., a fluorescent display tube, a liquid crystal display or the like. The displaying device 7 generates a display light such as driving information or the like, and arranged such that the display light is incident at Brewster's angle (θ = 56.6° ) on the laminated glass 10. The display light includes S-wave and P-wave and is incident to a light-polarizing device 8 for polarizing light into P-wave, so that the display light from the displaying device 7 is polarized to transmit the P-wave.

This P-wave is incident on the inboard-side glass plate 1B, in which no reflection is made at the inboard surface (the interface between air and the glass plate) of the glass plate 1B because the P-wave is incident at Brewster's angle to the inboard-side glass plate 1B. As a result, the whole amount of light from the light-polarizing device 8 enters the laminated glass 10. The thus entering light reaches the polarization-direction changing layer 4, in which the P-wave is rotated into S-wave. This S-wave then reaches the light-transmittable reflection layer 3 and reflected in accordance with the reflectivity of the light-transmittable reflection layer 3. In this embodiment, the reflectivity of the light-transmittable reflection layer 3 is about 22 %. The reflected S-wave again enters the polarization-direction changing layer 4 and rotated again into the P-wave. This P-wave reaches the inboard surface (the interface between air and the glass plate) of the inboard-side glass plate 1B and outgoes toward a driver, in which the outgoing angle of the light (P-wave) is Brewster's angle and therefore the whole amount of the light can be observed by eyes 9 of the driver causing no reflection of the light at the interface between the air and the glass plate.

The light (the S-wave) passing through the light-transmittable reflection layer 3 enters the polarization-direction changing layer 2 to be rotated into the P-wave. This P-wave then enters the outboard-side glass plate 1A and outgoes through the outboard surface (the interface between air and the glass plate) of the glass plate 1A, in which the outgoing angle of the light (P-wave) is about Brewster's angle and therefore no reflection is made so that the whole light outgoes as the P-wave. As a result, double image cannot be formed and therefore a clear image of the driving information or the like can be observed by the driver. It will be understood that the reflectivity of the reflection layer 3 is about 22 % as discussed above, and therefore the driver can clearly observe the displayed image of the information or the like transmitted from the displaying device 7.

Fig. 2 illustrates an essential part of another embodiment of the display system according to the present invention, similar to the embodiment of Fig. 1 with the exception that the two polarization-direction changing layers 2, 4 are respectively attached to the outboard-side glass plate 1A and the inboard-side glass plate 1B. More specifically, the laminated glass 6 forming part of the display system S of this embodiment is prepared as follow: First, the polarization-direction changing layer 2 having a thickness of 5 µm is formed on the substrate film (not shown) made of polyethylene terephthalate or the like, in the same manner as that in the embodiment of Fig. 1. Subsequently, silver is coated on the polarization-direction changing layer 2 under usual sputtering to form a silver layer (having a thickness of about 55 A) serving as the light-transmittable reflection layer 3. Thereafter, the acrylic resin is coated on the light-transmittable reflection layer 3 to form a barrier layer (not shown), thereby obtaining an outboard-side laminated film. This outboard-side laminated film is bonded through the tape-like adhesive (not shown) to the inboard surface of the outboard-side glass plate 1A, upon removing the substrate film.

Then, the polarization-direction changing layer 4 having a thickness of 5 µm is formed on the substrate film (not shown) made of polyethylene terephthalate or the like, in the same manner as that in the embodiment of Fig. 1. Subsequently, the acrylic resin is coated on the polarization-direction changing layer 4 to form a barrier layer (not shown), thereby obtaining an inboard-side laminated film. This inboard-side laminated film is bonded through the tape-like adhesive to the outboard surface of the inboard-side glass plate 1B, upon removing the substrate film. The outboard-side and inboard-side laminated films constitute the optically functioning film arrangement F.

Thereafter, the inboard-side glass plate 1B is temporarily bonded at its outboard surface to the inboard surface of the outboard-side glass plate 1A with the intermediate film (made of polyvinyl butyral or the like) 5 disposed between the glass plates 1B, 1A, so that the optically functioning film arrangement F is located between the outboard-side glass plate 1A and the inboard-side glass plate 1B in such a manner the inboard-side laminated film is separate from the outboard-side laminated film, as clearly shown in Fig. 1. It will be understood that a layer of the intermediate film 5 is formed between the inboard-side laminated film and the outboard-side laminated film. Such a temporarily bonded structure is then subjected to a usual autoclave treatment, thereby obtaining the laminated glass 6 used for the automotive vehicle front windshield glass W.

The above-discussed laminated glass 6 is used as the automotive vehicle windshield glass W and forms part of the head-up display system S which includes the displaying device 7 for generating the display light such as driving information or the like, and the light-polarizing device 8 for polarizing the display light into the P-wave as same as in the embodiment of Fig. 1.

With this arrangement, by causing the display light of the P-wave to be incident on the laminated glass 6 as the front windshield glass W at Brewster's angle or an angle around Brewster's angle , double image of the driving information or the like can be effectively prevented from being produced or observed by the driver.

While the display system S of the embodiments has been shown and described as including two (inorganic) glass plates, it will be understood that the glass plates may be replaced with a single transparent plate or two transparent plates, in which the transparent plate is made of a transparent organic glass plate such as a transparent plastic plate. Otherwise, the two transparent plates may be an inorganic glass plate and an organic glass plate, respectively.

The display system S of the embodiments has been shown and described as a head-up display system including an automotive vehicle front windshield glass, it will be understood that the display system S may includes other window glasses of the automotive vehicle so as to form a combiner, or includes a single glass plate (separate from the windshield glass or window glass) so as to form a separate combiner. Additionally, the display system S may includes architectural glass or a partition wall glass so as to display a variety of information.

In case that the display system S includes the automotive vehicle windshield glass (laminated glass), it is preferable to bond the optically functioning film arrangement F onto the inboard surface of the outboard-side glass plate 1A from the view point of improving so-called impact and penetration resistances of the windshield glass. The impact resistance is improved because a part (in contact with the optically functioning film arrangement F) of the outboard-side glass cannot drop into the passenger compartment even when the windshield glass is broken, though the part is low in bonding strength as compared with the other parts in contact with the intermediate film 5 made of polyvinyl butyral. Additionally, it is preferable to bond the optically functioning film arrangement F onto the outboard surface of the inboard-side glass plate 1B from the view point of improving durability of the polarization-direction changing layers 2, 4 in the optically functioning film arrangement F because sun light reaches the polarization-direction changing layers through the intermediate film (polyvinyl butyral) so that ultraviolet ray can be absorbed by the intermediate film to some extent.

In case that the display system S of the present invention includes a laminated glass having the outboard-side and inboard-side glass plates 1A, 1B, the two polarization-direction changing layers 2, 4 may be bonded respectively to the outboard-side and inboard-side glass plates and separate from each other, in which the light-transmittable reflection layer is formed on either one of the two polarization-direction changing layers 2, 4.

While the light-transmittable reflection layer 3 has been shown and described as being the silver (Ag) layer, it will be understood that the light-transmittable reflection layer may be one of a variety of layers made respectively of Au, Cu, or a metal oxide such as indium oxide or tin oxide.

The optically functioning film arrangement F has been shown and described as including the polarization-direction changing layers whose liquid crystal high polymer is in twisted nematic orientation under liquid crystal condition and is in glassy state at a temperature lower than a liquid crystal transition point thereof. This is preferable from the view point of preventing double image from being formed throughout a whole visible region. However, it will be appreciated that the above-type of the polarization-direction changing layers may be replaced with other types of polarization-direction changing layers such as a transparent layer having a birefringence, and a so-called λ/2 film or layer.

According to the embodiments, the light-transmittable reflection layer 3 lies on the surface of the polarization-direction changing layer 1, and therefore the reflectivity of the optically functioning film arrangement F can have a reflectivity higher than 20 % thereby making a display at a high brightness. Additionally, since the display light which has been polarized into the P-wave is to be incident on the laminated glass W at Brewster's angle (56.6° in case of glass plate) or an angle around Brewster's angle (i.e., Brewster's angle ± 10° ), nearly no reflection is made at the interface between air and the transparent plate so that almost whole display light enters the polarization-direction changing layer 4 at the displaying device side to be rotated into the S-wave. This S-wave is reflected by the light-transmittable reflection layer 3, and then again enters the polarization-direction changing layer 4 at the displaying device side to be rotated into the P-wave. This P-wave reaches the interface between air and the transparent plate and outgoes to air at Brewster's angle (56.6° in case of glass plate) or an angle around Brewster's angle, so that nearly no reflection is made at the interface. As a result, almost whole the display light having the P-wave outgoes toward the driver or the like located at the side of the displaying device 7.

The display light which has not been reflected by the light-transmittable reflection layer enters as the S-wave into the polarization-direction changing layer 2 at the opposite side of the reflection layer 3 with respect to the displaying device 7 and rotated into the P-wave. This P-wave reaches the inboard surface (interface between air and the transparent plate) of the transparent plate 1A and outgoes into at Brewster's angle or an angle around Brewster's angle, so that nearly no reflection is made at the interface. As a result, almost whole the display light having the P-wave outgoes to the opposite side with respect to the displaying device 7 so that no double image of the display light cannot be formed.

Although the first polarization-direction changing layer 2, the light-transmittable reflection layer 3 and the second polarization-direction changing layer 4 have been shown and described as being arranged and laminated on the transparent plate 1A in the order mentioned in the embodiment of Fig. 1, it will be appreciated that it is preferable that an adhesive layer for bonding purpose or a ultraviolet ray absorbing layer is interposed between the transparent plate 1A and the polarization-direction changing layer 2. Additionally, it is preferable that the barrier film lies on the top surface (in contact with the intermediate film 5) of the optically functioning film arrangement F in order to prevent plasticizer in the intermediate film from moving into the polarization-direction changing film. It will be also appreciated that it is not essential that the two polarization-direction changing layers are united as a single body and therefore may be separated from each other as illustrated in the embodiment of Fig. 2, attaining the same advantageous effects as in the first embodiment.

It will be appreciated to be preferable that the light-transmittable reflection layer 3 has such a characteristics that its reflectivity is high for light having wavelengths corresponding to information to be displayed and low for other lights. This improves the brightness of the displayed light of the information while preventing the transmissivity of visible light from being lowered since almost all other lights pass through the light-transmittable reflection layer 3.

## Claims

1. A display system comprising:
at least one transparent plate;
an optically functioning film arrangement bonded to said transparent plate and including first and second polarization-direction changing layers, and a light-transmittable reflection plate disposed between said first and second polarization-direction changing layers;
a displaying device for generating a display light of information; and
a light polarizing device for polarizing the display light into P-wave, the display light having the P-wave being incident around Brewster's angle with respect to said transparent plate member and reaching said light-transmittable reflection layer to be reflected toward the person so as to form a display of the information.

2. A display system as claimed in Claim 1, wherein said at least one transparent plate includes first and second transparent plates, said first transparent plate being located outside relative to said second transparent plate defining a space in which a person resides,
wherein said display system further comprises an intermediate film disposed between said first and second transparent plates to bond said first and second transparent plates, and
wherein said optically functioning film arrangement is arranged such at least said first polarization-direction changing layer is bonded to said first transparent plate and separate from said second transparent plate so that a layer of said intermediate film lies between said first polarization-direction changing layer and said second transparent plate.

3. A display system as claimed in Claim 2, wherein said first polarization-direction changing layer, said light-transmittable reflection layer and said second polarization-direction changing layer are laminated to form said optically functioning film arrangement in a laminated state, said optically functioning film arrangement being bonded to said first transparent plate and separate from said second transparent plate so that the layer of said intermediate film lies between said optically functioning film arrangement and said second transparent plate member.

4. A display system as claimed in Claim 2, wherein said first polarization-direction changing layer and second polarization-direction changing layer are bonded respectively to said first and second glass plates, said light-transmittable reflection layer being formed on one of said first and second polarization-direction changing layers, the layer of said intermediate film lying between one of said first and second polarization-direction changing layers and said light-transmittable reflection layer.

5. A display system as claimed in Claim 2, wherein said first and second transparent plates are respectively outboard-side and inboard-side glass plates constituting a laminated glass as a front windshield glass of an automotive vehicle, said inboard-side glass defining a passenger compartment in which a driver resides.
